# EUROPEAN PATENT SPECIFICATION

(11) **EP 3 584 138 B1**
(45) Date of publication and mention of the grant of the patent: **09.12.2020**
(21) Application number: 19180986.2
(22) Date of filing: 18.06.2019
(51) Int. Cl.: B61H 15/00

(54) **METHOD AND SYSTEM FOR UPGRADING A SLACK ADJUSTER OF A BRAKE SYSTEM**
VERFAHREN UND SYSTEM ZUR NACHRÜSTUNG EINES GESTÄNGESTELLERS EINER BREMSANLAGE
PROCÉDÉ ET SYSTÈME DE MISE À NIVEAU D'UN DISPOSITIF DE RATTRAPAGE DE JEU D'UN SYSTÈME DE FREINAGE

(30) Priority: 18.06.2018 EP 18178365
(43) Date of publication of application: 25.12.2019
(73) Proprietor: Faiveley Transport Nordic AB, 261 35 Landskrona (SE)
(72) Inventor: BLENNOW, Fredrik, 237 31 Bjärred (SE); OLSSON, Sten, 267 77 Ekeby (SE)
(74) Representative: Ström & Gulliksson AB

(56) References cited:
- US-A- 3 326 336
- US-A1- 2007 209 886

## Description

### TECHNICAL FIELD

The present invention relates in general to slack-adjusters, and in particular the invention concerns a method for upgrading a slack-adjuster for a brake system of a railway vehicle.

### BACKGROUND

Devices for slack-adjusting of brake units of railway vehicles are well-known in the art. An example of such a slack-adjuster is disclosed in US3602343A, which incorporates an automatic double-acting slack-adjuster for railway cars having two spin nuts arranged on a threaded rod. The spin nuts are rotatable to take up or let out slack and have clutch surfaces engageable with clutch surfaces on a traction sleeve tube to stop the rotation. Normally, the spin nuts are clutched to prevent unintended relative movements under operating conditions of heavy vibration and shock.

A further example is described in US3669224A, where the slack-adjuster includes three spin nuts arranged on a threaded rod. The spin nuts are variably operated to take up or let out slack in the brake rigging and have clutch surfaces cooperating with clutch surfaces adjacent the spin nuts to stop their rotation. Normally, the spin nuts are clutched to prevent unintended relative movements under operating conditions of vibration and shock. Economical standard tubular parts, and simple spin nuts are employed and arranged for ease of assembly and reliable operation. Cf. also US3326336A.

These types of slack-adjusters are mounted to a brake system of a rail vehicle using fasteners known in the art, such as those shown in US5615755A and US5975254A.

Slack-adjusters have been and continue to be widely used components of brake systems in rail vehicles since the middle of the last century. Over the years, slack-adjusters have been iterated upon and improved as any other technology. However, the railway industry may ironically at times move rather slowly and there are many trains operating today with decades old slack-adjusters.

Most slack-adjusters are used for as long as possible until they need to be scrapped. Spare parts may be used to extend the life time of a slack-adjuster, but they may be hard to find for some of the older models. Once scrapped, the slack-adjusters need replacing and preferably a fresh model may be used as the development of technology has allowed for cheaper, safer and more durable models in recent years.

The model of usage described above has three flaws. Firstly, it may be dangerous to try to maximize the life-span of decades old technology as these parts become much more likely to break down as they deteriorate over time. Secondly, the newer or fresh models are much safer and should be used in a greater capacity than they are today. Finally, scrapping the old slack-adjusters is a waste of quality engineering that could have been put to better use.

Some companies elect to replace their older slack-adjusters with newer models periodically. This attempts to solve the first two problems described above, however it does not solve the third problem and most importantly it has its own further problem, namely that this practice is prohibitively expensive.

### SUMMARY

In view of recent demands from the market to further develop the slack adjuster technology, it is in object of the present invention to provide a method which addresses the above shortcomings and needs.

This and other objects, which will be understood from the following description, have now been achieved by the novel method defined in appended claim 1; preferred embodiments being set forth in the related dependent claims.

In a first aspect, there is provided a method of upgrading a slack-adjuster for a brake system of a rail vehicle by altering or adding of one or more preferred features of the slack-adjuster. The method comprises the steps of: receiving input from a user relating to one or more properties, i.e. physical properties, of the slack-adjuster to be improved or added, wherein the one or more physical properties to be improved or added is associated with preference parameters corresponding to the one or more of preferred features of the slack-adjuster after execution of an upgrade; determining a present version of the slack-adjuster; finding an upgrade path based on the determined present version of the slack-adjuster for the slack-adjuster to obtain the upgraded or added property, i.e. the one or more physical properties to be improved or added; and executing the upgrade according to the upgrade path.

Executing the upgrade comprises assembling to the slack-adjuster the preference parameters associated with the property to be upgraded, i.e. improved or added. The preference parameters may be slack-adjuster components for achieving the one or more physical properties to be improved or added upon being assembled to the slack-adjuster.

In one embodiment, the method comprises returning the upgraded slack-adjuster.

In another embodiment, the method comprises receiving the slack-adjuster.

In a further embodiment, determining a present version of the slack-adjuster comprises determining one or more parameters relating to the slack-adjuster.

In one embodiment, finding an upgrade path for the slack-adjuster comprises identifying determined parameters being indicative of and/or deviating from the preference parameters.

The determined parameters may be slack-adjuster components of the slack-adjuster.

The determined parameters may relate to one or more of a barrel, a leader nut, a leader nut casing, a protection tube, a protection tube sealing means, an end muff, a sliding sleeve, a coupling sleeve and a coupling ring of the slack-adjuster.

In a further embodiment, the preference parameters relating to the leader nut casing and/or the protection tube may comprise a pressed plate leader nut casing, a pressed plate protection tube and/or a polymer guide bush.

The preference parameters relating to the protection tube sealing means may comprise a labyrinth seal.

In a still further embodiment, a preference parameter relating to the barrel may comprise a pressed plate barrel having an end thereof being provided with drainage channels.

A preference parameter relating to one or more of the end muff, sliding sleeve, coupling sleeve and coupling ring may comprise a toothed friction surface.

In a yet further embodiment, a preference parameter relating to the leader nut may comprise to a polymer leader nut.

The slack-adjuster may comprise one or more of slack adjusting means housed in a barrel, a spindle operatively connected to the slack adjusting means and protruding from a leader nut casing detachably attached the barrel, a protection tube received in the leader nut casing and enveloping at least part of the spindle, a protection tube sealing means configured to provide sealing between the tube and the spindle, an end muff, a sliding sleeve, a coupling sleeve and a coupling ring.

The method may further comprise finding the upgrade path for the slack-adjuster to obtain the upgraded or added property among a plurality of upgrade paths each linking a predetermined version of the slack-adjuster to an upgraded slack-adjuster having one or more upgraded or added physical property.

### BRIEF DESCRIPTION OF THE DRAWINGS

Embodiments of the invention and related advantages will be illustrated in more detail below by a number of non-limiting examples and with reference to the accompanying schematic drawings, in which
Fig. 1 is a diagrammatic representation of the method according to an embodiment,
Fig. 2 shows certain features of an exemplary slack-adjuster susceptible to upgrade, and
Fig. 3 is a schematic representation of the method according to an embodiment.

### DETAILED DESCRIPTION OF EMBODIMENTS

Hereinafter, certain embodiments will be described more fully with reference to the accompanying drawings. The invention may, however, be embodied in many different forms and should not be construed as limited to the embodiments set forth herein. Rather, these embodiments are provided by way of example so that this disclosure will be thorough and complete, and will fully convey the scope of the invention, such as it is defined in the appended claims, to those skilled in the art.

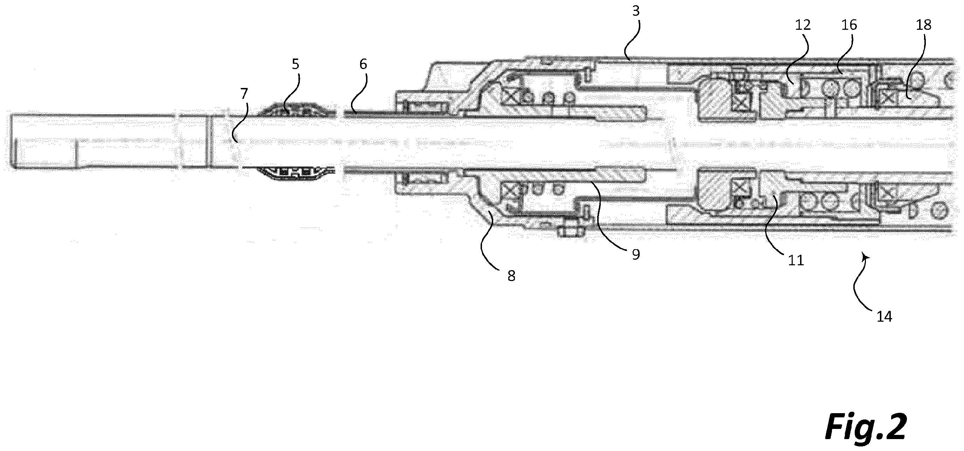

With reference to Fig. 2, there is shown an example of a slack-adjuster as found in the prior art. The slack-adjuster comprises one or more of slack adjusting means housed in a barrel 3, a spindle 7 operatively connected to the slack adjusting means 14 and protruding from a leader nut casing 8 detachably attached to the barrel 3, a protection tube 6 received in the leader nut casing 8 and enveloping at least part of the spindle 7, a protection tube sealing means 5 configured to provide sealing between the tube 6 and the spindle 7, and where applicable also an end muff 11, a sliding sleeve 12, a coupling sleeve 16 and a coupling ring 18.

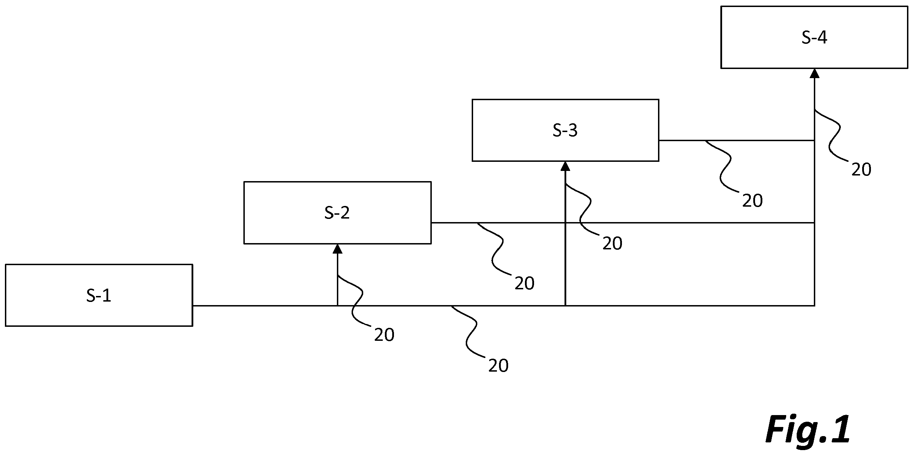

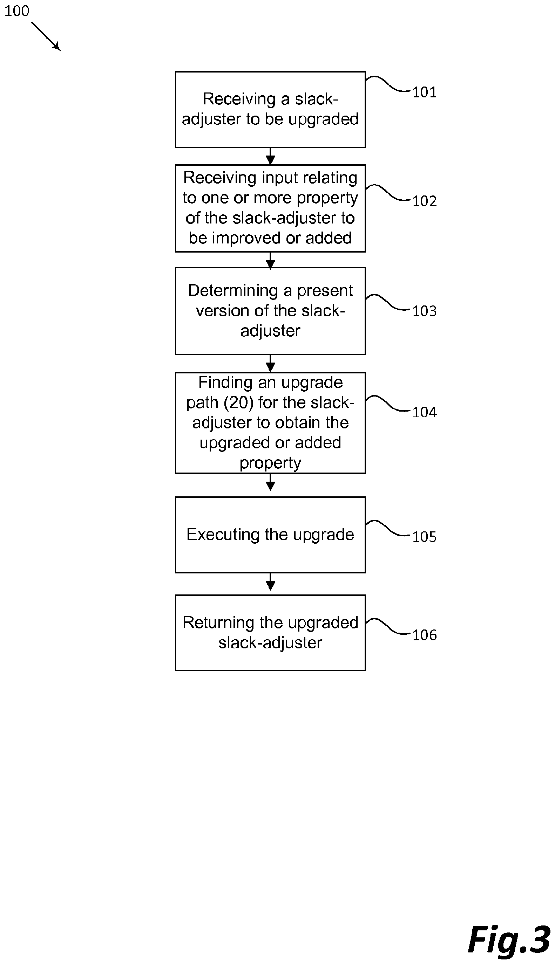

Referring to Figs 1 and 3, in one exemplary embodiment the method 100 may comprise a step 101 of the slack-adjuster 1 being received, for example in an upgrade facility (not shown). However, it has been contemplated that the method or steps thereof may be carried out elsewhere, for example in the field or in the premises of the user.

In a further step 102, input from a user relating to one or more properties of the slack-adjuster 1 to be improved or added is received and the one or more properties to be improved or added are been established based on the received input. This enables and facilitates due preparation to execute the method. The one or more properties may be considered as one or more physical properties of the slack-adjuster.

The input may be received by an upgrading operator or a service client, i.e. a digitalized service client configured to relay said input to an upgrading operator.

In some embodiments, the input relating to the one or more properties of the slack-adjuster to be improved or added may be received prior to the slack-adjuster being received. Alternatively, the input may be received subsequently.

Provided that a large variety of slack-adjusters are available and thus susceptible to upgrade, in a still further step 103, there is determined which type of or version a slack-adjuster 1 has been received. This step typically includes additionally determining whether the received slack-adjuster 1 is susceptible to upgrade, i.e. if the method is applicable to the received slack-adjuster.

Referring back to Figs 1 and 3, the determining of a present version of the slack-adjuster comprises determining one or more parameters relating to the slack-adjuster. These parameters typically correspond to one or more features of the slack-adjuster 1. Determination of features, i.e. parameters may be carried out automatically, semi-automatically or manually in the upgrade facility (not shown) or correspondingly prior receiving the slack-adjuster 1 to be upgraded.

In an exemplary embodiment, an upgrading operator determines the present version of the slack-adjuster 1. The upgrading operator may determine one or more parameters relating to the slack-adjuster. This may be performed by means of visual control of the slack-adjuster 1.

Once the present version of the received slack-adjuster 1 has been established, the initial starting point of an upgrade path is thus effectively established in a further step 104 comprising finding an upgrade path 20 for the slack-adjuster 1 to obtain the upgraded, i.e. improved or added property. The upgrade path 20 (see Fig.1) links the determined present version of the received slack-adjuster 1 to the upgraded slack-adjuster 1 having the one or more upgraded, i.e. improved properties or added property. Hence, the method comprises finding an upgrade path 20 for the slack-adjuster 1 to obtain the upgraded or added property. The method thus comprises finding the upgrade path 20 based on the determined present version of the slack-adjuster 1. The found upgrade path 20, which also can be referred to as the selected or identified upgrade path 20, is thus associated with the determined version of the slack-adjuster 1.

As indicated in Fig.1, showing for ease of understanding a number of plausible upgrade paths 20 where for example slack-adjuster of version S-2 may be upgraded to one of versions S-3 or S-4 by means depending on which of the upgrade paths 20 are established. It follows that each upgrade path results in one or more upgraded, i.e. improved or added property.

The property to be upgraded, i.e. improved or added is associated with preference parameters. Preference parameters correspond to one or more preferred features of the slack-adjuster 1 after execution of the method has been completed i.e. by executing the upgrade path 20 or after execution of an upgrade. Thus, the present version of the slack-adjuster 1 corresponds to determined features at the initial point of the established upgrade path, whereas preference parameters correspond preferred features upon completion of the upgrade, i.e. the end of the upgrade path, i.e. after the execution of the upgrade. The method may thus be considered a method for upgrading the slack-adjuster by altering or adding of one or more preferred features of the slack-adjuster.

With various versions of slack-adjuster 1 being susceptible for upgrading, it is appreciated that the method is applicable on a variety of slack-adjusters of various versions e.g. versions S1, S2, S3 as shown in Fig.1. Thus, a starting point of the upgrade path is established. Hence, the method may comprise finding said upgrade-path 20 based on the determined present version of the slack-adjuster. Each upgrade-path 20 may have a starting point based on the determined present version.

In an exemplary embodiment, an upgrading operator may find the upgrade path 20.

The method may further comprise finding the upgrade path 20 for the slack-adjuster to obtain said upgraded or added property among a plurality of upgrade paths 20. Each upgrade path 20 links a predetermined version of the slack-adjuster 1 to an upgraded slack-adjuster having one or more upgraded, i.e. improved or added physical property.

Accordingly, there is determined whether the received slack-adjuster 1 is of a version which comprises one or more of the preference parameters.

Therefore, finding an upgrade path for the slack-adjuster comprises identifying determined parameters being indicative of and/or deviating from said preference parameters. For example, a determined parameter of the received slack-adjuster may correspond to a preference parameter. This may be performed by means of an upgrading operator. It may further be performed by means of visual control of the slack-adjuster 1, preferably performed by the upgrading operator.

Determined parameters relate to features of the received slack-adjuster, i.e. the determined parameters may be slack-adjuster components of the slack-adjuster 1, including but not limited to one or more of the barrel 3, the leader nut 9, the leader nut casing 8, the protection tube 6, the protection tube sealing means 5 and where applicable also the end muff 11, the sliding sleeve 12, the coupling sleeve 16 or the coupling ring 18 of the slack-adjuster 1. Slack-adjuster components of the slack-adjuster 1 herein refers to components which are comprised in the present slack-adjuster 1, i.e. the slack-adjuster 1 before execution of the upgrade.

To determine the present version based on above described determined parameters is particularly advantageous due to slack-adjusters often being in service for a long time and not having any markings, labels or product data for quickly identifying which version of the slack-adjuster 1 is.

The method may thus further comprise determining the present version of the slack-adjuster among a plurality of versions of slack-adjusters, one or more parameters being related to each version. Determining the present version among the plurality of versions may be based on the determined parameters related to the slack-adjuster.

The determining of a present version may further comprise the upgrading operator utilizing a version data set for determining the present version of the slack-adjuster 1 based on the determined parameters by matching with identifying parameters for uniquely identifying a version of slack-adjuster. The version data set comprises a set of versions of slack-adjusters and a set of identifying parameters, each version of slack-adjuster relating to one or more identifying parameters. The method may thus comprise the upgrading operator determining the version by matching the identifying parameters with the determined parameters.

This allows the upgrading operator to quickly identify the version of the slack-adjuster, even though it exists a large number of available slack-adjusters on the market many of which not having any labelling for indicating the version.

The version data set may be in the form of a digital data base or a printed text.

In an exemplary embodiment, the determined parameters relate to the leader nut 9, the leader nut casing 8, the protection tube 6, the protection tube sealing means 5, the end muff 11, the sliding sleeve 12, the coupling sleeve 16 and the coupling ring 18 of the slack-adjuster 1.

In this context, is should be appreciated that an upgrade path may comprise one or more improved or added physical properties, as derivable from Fig. 1.

In an exemplary embodiment, each of the plurality of upgrade paths may be associated with a single version of slack-adjuster and comprise one or more improved or added physical properties. In an exemplary embodiment, multiple upgrade-paths may be available for a single version of slack-adjuster, whereby finding an upgrade path may further comprise selecting an upgrade path based on the input from the user relating to one or more physical properties of the slack-adjuster 1.

The method may thus further comprise the upgrading operator utilizing an upgrade data set for finding the upgrade path 20. The upgrade data set comprises a set of upgrade paths, slack-adjuster versions and improved or added physical properties. This allows for the upgrading operator to quickly assess which upgrade path to be selected among a large number of possible upgrade-paths.

In the exemplary embodiment, properties to be upgraded, i.e. improved or added comprise one or more of improved moisture management, prolonged service interval, improved vibration management, reduced weight and reduced operation cost. In the exemplary embodiment, preference parameters relating to the leader nut casing and/or the protection tube comprises a pressed plate leader nut casing, a pressed plate protection tube and/or a non-metal guide bush, preferably a plastic guide bush interspaced between the leader nut casing 8 and the protection tube 6. Thereby the detrimental effect of metal-to-metal wear is circumvented while achieving reduced weight and cost by means of thinner protection tube 6 and leader nut casing 8.

Relating to the protection tube sealing means 5, a preference parameter comprises a labyrinth seal. This is a type of mechanical seal that provides a tortuous path to help prevent leakage. A labyrinth seal may be composed of many grooves that press tightly inside another axle, or inside a hole, so that the fluid has to pass through a long and difficult path to escape. Sometimes screw threads exist on the outer and inner portion of the protection tube sealing means 5. These interlock, to produce the long characteristic path which slows leakage. The labyrinth seal may be extend along an internal circumference of the barrel. Thereby transfer of moisture between the interior and exterior of the slack-adjuster is hindered rather than blocked whereby issues resulting from corrosion are effectively reduced and thus service interval of the slack-adjuster is substantially prolonged.

Also, a preference parameter relating to the barrel 3 comprises a pressed plate barrel having an end thereof being provided with drainage channels for moisture drainage and/or labyrinth barrel head and/or barrel head liner (not shown). A reduced material thickness of the barrel 3 may facilitate accommodation of the feature of a labyrinth seal. Also, reduced material thickness of the barrel 3 provides for further weight reduction and savings in operation costs.

In addition, a preference parameter relating to one or more of the end muff 11, sliding sleeve 12, coupling sleeve 16 and coupling ring 18 comprises a toothed surface. The surfaces are friction and/or coupling-surfaces and have the advantageous effect that they improve and/or add the feature of improved durability of the slack-adjuster 1 when operation in vibrating condition, such as when a railway vehicle equipped with the slack-adjuster is operated on rough or uneven rail tracks (not shown).

Further, a preference parameter relating to the leader nut 9 comprises to a plastic leader nut 9, e.g. polymer, preferably hard polymer. The preference parameter renders the leader nut 9 into a wear-part which is sacrificed to the benefit of not excessively wearing out the more costly leader nut casing 8, whereby the less costly leader nut 9 is instead replaced when worn out, thereby providing for savings in operation costs.

Referring again to Figs 1 and 3, the method 100 further comprises a step 105 of executing the upgrade by upgrading the received slack-adjuster 1 in accordance with the established upgrade path 20, i.e. according to the upgrade path 20. The execution of the upgrade comprises assembling to the slack-adjuster 1 the preference parameters associated with the property to be upgraded, i.e. improved or added. The preference parameters may be slack-adjuster components for achieving the one or more physical properties to be improved or added upon being assembled to the slack-adjuster 1. Accordingly, the preference parameters may be considered slack-adjuster components to be added to the slack-adjuster to achieve the physical properties as indicated by the input from the user.

Following the execution of the upgrade whereby the slack-adjuster arrives at the end of the upgrade path, a final step 106 comprises that the upgraded slack-adjuster is returned to the customer where typically reinstalled in a braking system of a rail vehicle (not shown).

The executing of the upgrade may be performed by an upgrading operator. Accordingly, said upgrading operator assembles the preference parameters to the slack-adjuster 1.

It is noted that the upgrading operator performing the receiving of the input from the user, the determining of the upgrade path, the finding of the upgrade path and the executing of the upgrade may not be the same upgrading operator. For example each one of said method steps may be performed by different upgrading operators of the same upgrade facility.

In one aspect, there is provided a system for modifying a slack-adjuster 1 for a brake system of a rail vehicle according to any one of the disclosed embodiments of the method 100. The system comprises means for receiving said slack-adjuster 1, for example an upgrade facility, means for determining a present version of said slack-adjuster 1 which may comprise automatic means, semi-automatic means or manual means, means for executing the upgrade which may include means for disassembling and/or reassembling the slack-adjuster and means for returning upgraded slack-adjuster.

It should be appreciated that the described exemplary embodiment constitutes one possible implementation of the inventive method 100 and that it is understood by the skilled reader, in particular in view of Fig. 1, that the disclosed upgrade method 100 is not limited to the described example but may be in the form of a less comprehensive upgrade path limited only to a selected few of the described preference parameters.

## Claims

1. A method of upgrading a slack-adjuster (1) for a brake system of a rail vehicle by altering or adding of one or more preferred features of the slack-adjuster (1), said method (100) comprising:
receiving input from a user relating to one or more physical properties of said slack-adjuster (1) to be improved or added, wherein the one or more physical properties to be improved or added is associated with preference parameters corresponding to the one or more of preferred features of the slack-adjuster (1) after execution of an upgrade;
determining a present version of said slack-adjuster (1);
finding an upgrade path (20) based on the determined present version of the slack-adjuster (1) for said slack-adjuster (1) to obtain the one or more physical properties to be improved or added; and
executing the upgrade according to said upgrade path (20), wherein executing the upgrade comprises assembling to said slack-adjuster (1) said preference parameters associated with said one or more physical properties to be improved or added, the preference parameters being slack-adjuster components for achieving the one or more physical properties to be improved or added upon being assembled to the slack-adjuster (1).

2. The method according to claim 1, wherein determining a present version of said slack-adjuster (1) comprises determining one or more parameters relating to said slack-adjuster (1).

3. The method according to claim 1 or 2, wherein finding an upgrade path for the slack-adjuster (1) comprises identifying determined parameters being indicative of and/or deviating from said preference parameters.

4. The method according to claim 3, wherein the determined parameters are slack-adjuster components of the slack-adjuster (1).

5. The method according to claim 3 or 4, wherein said determined parameters relate to one or more of a barrel (3), a leader nut (9), a leader nut casing (8), a protection tube (6), a protection tube sealing means (5), an end muff (11), a sliding sleeve (12), a coupling sleeve (16) and a coupling ring (18) of said slack-adjuster (1).

6. The method according to claim 5, wherein the preference parameters relating to said leader nut casing (8) and/or said protection tube (6) comprises a pressed plate leader nut casing, a pressed plate protection tube and/or a polymer guide bush.

7. The method according to claim 5 or 6, wherein said preference parameter relating to said protection tube sealing means (5) comprises a labyrinth seal.

8. The method according to any one of claims 5 to 7, wherein a preference parameter relating to said barrel (3) comprises a pressed plate barrel having an end thereof being provided with drainage channels.

9. The method according to any one of claims 5 to 8, wherein a preference parameter relating to one or more of said end muff (11), sliding sleeve (12), coupling sleeve (16) and coupling ring (18) comprises to a toothed friction surface.

10. The method according to any one of claims 5 to 9, wherein a preference parameter relating to said leader nut (9) comprises to a polymer leader nut.

11. The method according to any one of the preceding claims, wherein said slack-adjuster (1) comprises one or more of slack adjusting means (14) housed in a barrel (3), a spindle (7) operatively connected to said slack adjusting means (14) and protruding from a leader nut casing (8) detachably attached to said barrel (3), a protection tube (6) received in said leader nut casing (8) and enveloping at least part of said spindle (7), a protection tube sealing means (5) configured to provide sealing between said tube (6) and said spindle (7), an end muff (11), a sliding sleeve (12), a coupling sleeve (16) and a coupling ring (18).

12. The method according to any one of the preceding claims, wherein the method further comprises finding the upgrade path (20) for the slack-adjuster (1) to obtain said upgraded or added property among a plurality of upgrade paths (20) each linking a predetermined version of the slack-adjuster (1) to an upgraded slack-adjuster having one or more improved or added physical property.

## Patentansprüche

1. Verfahren zum Upgraden eines Spielnachstellers (1) für ein Bremssystem eines Schienenfahrzeugs durch Ändern oder Hinzufügen eines oder mehrerer bevorzugter Merkmale des Spielnachstellers (1), wobei das Verfahren (100) umfasst:
Empfangen einer Eingabe von einem Benutzer hinsichtlich einer oder mehrerer zu verbessernder oder hinzuzufügender physikalischer Eigenschaften des Spielnachstellers (1), wobei die eine oder die mehreren zu verbessernden oder hinzuzufügenden physikalischen Eigenschaften mit Vorzugsparametern zusammenhängen, die nach Ausführung eines Upgrades dem einen oder den mehreren bevorzugten Merkmalen des Spielnachstellers (1) entsprechen,
Ermitteln einer gegenwärtigen Version des Spielnachstellers (1),
Finden eines Upgrade-Wegs (20) basierend auf der ermittelten gegenwärtigen Version des Spielnachstellers (1) für den Spielnachsteller (1), um das eine oder die mehreren zu verbessernden oder hinzuzufügenden physikalischen Eigenschaften zu erhalten, und
Ausführen des Upgrades gemäß dem Upgrade-Weg (20), wobei das Ausführen des Upgrades ein Einbauen der mit der einen oder den mehreren zu verbessernden oder hinzuzufügenden physikalischen Eigenschaften zusammenhängenden Vorzugsparameter in den Spielnachsteller (1) umfasst, wobei die Vorzugsparameter Spielnachstellerkomponenten zum Erreichen der einen oder der mehreren zu verbessernden oder hinzuzufügenden physikalischen Eigenschaften sind, nachdem sie in den Spielnachsteller (1) eingebaut sind.

2. Verfahren nach Anspruch 1, bei dem das Ermitteln einer gegenwärtigen Version des Spielnachstellers (1) ein Ermitteln einer oder mehrerer den Spielnachsteller (1) betreffender Parameter umfasst.

3. Verfahren nach Anspruch 1 oder 2, bei dem das Finden eines Upgrade-Weges für den Spielnachsteller (1) ein Identifizieren ermittelter Parameter umfasst, die indikativ für die Vorzugsparameter sind und/oder von ihnen abweichen.

4. Verfahren nach Anspruch 3, bei dem die ermittelten Parameter Spielnachstellerkomponenten des Spielnachstellers (1) sind.

5. Verfahren nach Anspruch 3 oder 4, bei dem die ermittelten Parameter eines oder mehreres betreffen aus einem Zylindermantel (3), einer Führungsmutter (9), einem Führungsmuttergehäuse (8), einem Schutzrohr (6), einer Schutzrohrabdichtungseinrichtung (5), einer Endmuffe (11), einer Gleithülse (12), einer Kupplungshülse (16) und einem Kupplungsring (18) des Spielnachstellers (1).

6. Verfahren nach Anspruch 5, bei dem die das Führungsmuttergehäuse (8) und/oder das Schutzrohr (6) betreffenden Vorzugsparameter ein Pressblechführungsmuttergehäuse, ein Pressblechschutzrohr und/oder eine Polymerführungsbuchse umfassen.

7. Verfahren nach Anspruch 5 oder 6, bei dem der die Schutzrohrabdichtungseinrichtung (5) betreffende Vorzugsparameter eine Labyrinthdichtung umfasst.

8. Verfahren nach einem der Ansprüche 5 bis 7, bei dem ein den Zylindermantel (3) betreffender Vorzugsparameter einen Pressblechzylindermantel umfasst, dessen eines Ende mit Drainagekanälen versehen ist.

9. Verfahren nach einem der Ansprüche 5 bis 8, bei dem ein Vorzugsparameter, der eines oder mehreres aus der Endmuffe (11), der Gleithülse (12), der Kupplungshülse (16) und dem Kupplungsring (18) betrifft, eine gezahnte Reibungsfläche umfasst.

10. Verfahren nach einem der Ansprüche 5 bis 9, bei dem ein die Führungsmutter (9) betreffender Vorzugsparameter eine Polymerführungsmutter umfasst.

11. Verfahren nach einem der vorhergehenden Ansprüche, bei dem der Spielnachsteller (1) eines oder mehreres aufweist aus einer in einem Zylindermantel (3) untergebrachten Spielnachstellungseinrichtung (14), einer Spindel (7), die betriebsfähig mit der Spielnachstellungseinrichtung (14) verbunden ist und aus einem Führungsmuttergehäuse (8) hervorragt, welches abnehmbar an dem Zylindermantel (3) angebracht ist, einem Schutzrohr (6), das in dem Führungsmuttergehäuse (8) aufgenommen ist und zumindest einen Teil der Spindel (7) umhüllt, einer Schutzrohrabdichtungseinrichtung (5), die dazu eingerichtet ist, eine Abdichtung zwischen dem Rohr (6) und der Spindel (7) bereitzustellen, einer Endmuffe (11), einer Gleithülse (12), einer Kupplungshülse (16) und einem Kupplungsring (18).

12. Verfahren nach einem der vorhergehenden Ansprüche, wobei das Verfahren ferner ein Finden des Upgrade-Weges (20) für den Spielnachsteller (1) zum Erzielen der aufgewerteten oder hinzugefügten Eigenschaft unter mehreren Upgrade-Wegen (20) umfasst, die jeder eine vorbestimmte Version des Spielnachstellers (1) mit einem aufgewerteten Spielnachsteller verknüpfen, der eine oder mehrere verbesserte oder hinzugefügte physikalische Eigenschaften hat.

## Revendications

1. Procédé de mise à niveau d'un ajusteur de jeu (1) pour un système de freinage d'un véhicule ferroviaire en altérant ou en ajoutant une ou plusieurs caractéristiques préférées de l'ajusteur de jeu (1), ledit procédé (100) comprenant :
la réception d'une entrée, en provenance d'un utilisateur, relative à une ou plusieurs propriétés physiques dudit ajusteur de jeu (1) à améliorer ou à ajouter, dans lequel l'une ou plusieurs propriétés physiques à améliorer ou à ajouter sont associées avec des paramètres préférentiels correspondant à une ou plusieurs des caractéristiques préférées de l'ajusteur de jeu (1) après l'exécution d'une mise à niveau ;
la détermination d'une version présente dudit ajusteur de jeu (1) ;
la découverte d'un trajet de mise à niveau (20) sur la base de la version présente déterminée de l'ajusteur de jeu (1) pour ledit ajusteur de jeu (1) afin d'obtenir les une ou plusieurs propriétés physiques à améliorer ou à ajouter ; et
l'exécution de la mise à niveau selon le trajet de mise à niveau (20), dans lequel l'exécution de la mise à niveau comprend l'assemblage audit ajusteur de jeu (1) desdits paramètres préférentiels associés avec ladite une ou plusieurs propriétés physiques à améliorer ou à ajouter, les paramètres préférentiels étant des composants de l'ajusteur de jeu pour obtenir les une ou plusieurs propriétés physiques à améliorer ou à ajouter lors de l'assemblage avec l'ajusteur de jeu (1).

2. Procédé selon la revendication 1, dans lequel la détermination d'une version présente dudit ajusteur de jeu (1) comprend la détermination d'un ou plusieurs paramètres relatifs audit ajusteur de jeu (1).

3. Procédé selon la revendication 1 ou 2, dans lequel la découverte d'un trajet de mise à niveau pour l'ajusteur de jeu (1) comprend l'identification de paramètres déterminés indiquant et/ou déviant desdits paramètres préférentiels.

4. Procédé selon la revendication 3, dans lequel les paramètres déterminés sont des composants de l'ajusteur de jeu (1).

5. Procédé selon la revendication 3 ou 4, dans lequel lesdits paramètres déterminés concernent un ou plusieurs parmi un cylindre (3), un écrou de guidage (9), un boîtier d'écrou de guidage (8), un tube de protection (6), un moyen d'étanchéité du tube de protection (5), un embout (11), un manchon coulissant (12), un manchon de couplage (16) et une bague de couplage (18) dudit ajusteur de jeu (1).

6. Procédé selon la revendication 5, dans lequel les paramètres préférentiels relatifs audit boîtier d'écrou de guidage (8) et/ou audit tube de protection (6) comprend un boîtier d'écrou de guidage de plaque comprimée, un tube de protection de plaque comprimée et/ou une douille de guidage en polymère.

7. Procédé selon la revendication 5 ou 6, dans lequel ledit paramètre préférentiel relatif audit moyen d'étanchéité du tube de protection (5) comprend un joint d'étanchéité labyrinthique.

8. Procédé selon l'une quelconque des revendications 5 à 7, dans lequel un paramètre préférentiel relatif audit cylindre (3) comprend un cylindre à plaque comprimée dont une extrémité est munie de canaux de drainage.

9. Procédé selon l'une quelconque des revendications 5 à 8, dans lequel un paramètre préférentiel relatif à un ou plusieurs parmi ledit embout (11), manchon coulissant (12), manchon de couplage (16) et bague de couplage (18) comprend une surface de friction dentée.

10. Procédé selon l'une quelconque des revendications 5 à 9, dans lequel un paramètre préférentiel relatif audit écrou de guidage (9) comprend un écrou de guidage en polymère.

11. Procédé selon l'une quelconque des revendications précédentes, dans lequel ledit ajusteur de jeu (1) comprend un ou plusieurs parmi un moyen d'ajustement de jeu (14) logé dans un cylindre (3), un axe (7) relié de manière opérationnelle audit moyen d'ajustement de jeu (14) et dépassant d'un boîtier d'écrou de guidage (8) fixé de manière amovible audit cylindre (3), un tube de protection (6) reçu dans ledit boîtier d'écrou de guidage (8) et enveloppant au moins une partie dudit axe (7), un moyen d'étanchéité de tube de protection (5) conçu pour fournir une étanchéité entre ledit tube (6) et ledit axe (7), un embout (11), un manchon coulissant (12), un manchon de couplage (16) et une bague de couplage (18).

12. Procédé selon l'une quelconque des revendications précédentes, dans lequel le procédé comprend en outre la découverte du trajet de mise à niveau (20) pour que l'ajusteur de jeu (1) obtienne ladite propriété mise à niveau ou ajoutée parmi une pluralité de trajets de mise à niveau (20), chacun reliant une version prédéterminée de l'ajusteur de jeu (1) à un ajusteur de jeu mis à niveau ayant une ou plusieurs propriétés physiques améliorées ou ajoutées.
